# EUROPEAN PATENT APPLICATION

(11) **EP 4 525 112 A1**
(43) Date of publication of application: **19.03.2025**
(21) Application number: 24189564.8
(22) Date of filing: 18.07.2024
(51) Int. Cl.: H01M 10/04, H01M 50/102, H01M 50/107, H01M 50/152, H01M 50/342, H01M 50/474, H01M 50/477, H01M 50/483, H01M 50/486, H01M 50/494, H01M 50/143

(54) **SECONDARY BATTERY**

(30) Priority: 13.09.2023 KR 20230121552
(71) Applicant: SAMSUNG SDI CO., LTD., Giheung-gu Yongin-si, Gyeonggi-do 17084 (KR)
(72) Inventor: Doo, Jae Gyun, 17084 Yongin-si, Gyeonggi-do (KR); Jung, Won Il, 17084 Yongin-si, Gyeonggi-do (KR)
(74) Representative: Gulde & Partner

(57) **Abstract**

The invention relates to a secondary battery (100) including a case (110) in which an electrolyte is accommodated, an electrode assembly (120) accommodated together with the electrolyte in the case (110), a cap assembly (140) coupled to an upper portion of the case (110), and a reinforcement part (160) comprising a reinforcement body (161) disposed between the electrode assembly (120) and the case (110) to extend in a first direction, in which the case (110) extends, and an extension part (162) disposed below the cap assembly (140) to extend from the reinforcement body (161) toward a central portion of the cap assembly (140) in a second direction crossing the first direction.

## Description

### BACKGROUND

### 1. Field

The present invention relates to a secondary battery.

### 2. Description of the Related Art

A secondary battery is a power storage system that provides excellent energy density to change electrical energy into chemical energy so as to store the chemical energy. If compared to non-rechargeable primary batteries, secondary batteries are rechargeable and are widely used for IT devices such as smartphones, cellular phones, laptops, tablet PCs, and the like. Recently, consumer and industry interest in electric vehicles has increased to prevent or reduce environmental pollution, and thus, high-capacity secondary batteries are being adopted for the electric vehicles. Such secondary batteries may desirably have characteristics such as relatively high density, relatively high output, and relative stability. Such a secondary battery includes an electrode assembly with a positive electrode and a negative electrode, a case for accommodating the electrode assembly, electrode terminals connected to the electrode assembly, and the like.

The above information described in the background of the present disclosure is merely disclosed for helping to understand the background technology of the present disclosure and therefore the information discussed in this Background section does not necessarily constitute prior art.

### SUMMARY

The invention is defined by the appended claims. The description that follows is subjected to this limitation. Any disclosure lying outside the scope of said claims is only intended for illustrative as well as comparative purposes.

One or more embodiments include a secondary battery in which strength of a case is reinforced to block direct transmission of force due to an internal pressure of the case to the case, thereby preventing damage or reducing damage to the case.

These and other aspects and characteristics of the embodiments according to the present invention are not limited to the above-mentioned characteristics, and other characteristics not mentioned herein will be more clearly understood by those skilled in the art from this specification and the attached drawings.

According to one or more embodiments, a secondary battery includes: a case in which an electrolyte is accommodated; an electrode assembly accommodated together with the electrolyte in the case; a cap assembly coupled to an upper portion of the case; and a reinforcement part including a reinforcement body disposed between the electrode assembly and the case to extend in a first direction, in which the case extends, and an extension part disposed below the cap assembly to extend from the reinforcement body toward a central portion of the cap assembly in a second direction crossing the first direction.

According to one or more embodiments, the case may include a beading part recessed in the second direction at a lower portion of the cap assembly, and wherein the extension part may be disposed between the beading part and the electrode assembly. In other words, the beading part may extend in the second direction. A lower portion may refer to an area that is closer to a lower end than to an upper end of the cap assembly.

According to one or more embodiments, the extension part may further extend toward the central portion of the cap assembly than the recessed beading part.

According to one or more embodiments, the secondary battery may further include: a first insulating plate disposed between the electrode assembly and a bottom surface of the case; and a second insulating plate disposed between the electrode assembly and the cap assembly.

According to one or more embodiments, the extension part may extend along a top surface of the second insulating plate. In other words, a part of the second insulating plate on which the extension part extends is disposed between the extension part and the electrode assembly.

According to one or more embodiments, the second insulating plate may include a first hole that passes between a top surface and a bottom surface of the second insulating plate, and wherein the extension part does not overlap the first hole on a plane. In other words, the first hole extends through the second insulating plate. Further, the first hole is uncovered or non-overlapping with respect to the extension part.

According to one or more embodiments, the cap assembly may include: a cap-up of which a central portion protrudes outward; a safety plate disposed below the cap-up and provided with a vent part; and a cap-down disposed below the safety plate and provided with a gas discharge hole that passes between a top surface and a bottom surface of the cap-down pass. In other words, the gas discharge hole extends through the cap-down. "Outward" may denote a direction that points away from the electrode assembly and/or the case.

According to one or more embodiments, the extension part may be disposed to not overlap the first hole and/or the gas discharge hole. In other words, the first hole and/or the discharge hole may remain uncovered or non-overlapping with respect to the extension part.

According to one or more embodiments, an end of the extension part may be spaced a first distance from a side part of the case, wherein the gas discharge hole may be spaced a second distance from the side part of the case, wherein the first distance is less than the second distance, and/or wherein the first hole may be spaced a third distance from the side part of the case, wherein the first distance is less than the third distance. In other words, when the first hole is spaced a third distance from the side part of the case and the gas discharge hole is spaced a second distance from the side part of the case, the first distance may be less than each of the second distance and the third distance.

According to one or more embodiments, an end of the extension part may be inclined to be adjacent to the cap assembly. In other words, the end of the extension part is inclined to extend toward or along the direction of the cap assembly such that the end is disposed adjacent thereto. In other words, a distance between the extension part and an upper surface of the electrode assembly increases from the reinforcement body toward a central portion of the cap assembly in a second direction crossing the first direction. The increase can be linear or described by a different function.

According to one or more embodiments, a lower end of the reinforcement body may have a diameter less than each of other areas thereof.

According to one or more embodiments, a lower end of the reinforcement body may have a thickness less than each of other areas thereof.

According to one or more embodiments, the reinforcement part may have a thickness less than that of the case.

According to one or more embodiments, the reinforcement part may have a diameter greater than an outer diameter of the electrode assembly and less than an inner diameter of the case.

According to one or more embodiments, the reinforcement part may contact the electrode assembly and/or the case.

According to one or more embodiments, a thickness of the reinforcement part may be about 5% or more and about 80% or less, preferably about 15% or more and about 65% or less, and particularly preferably about 30% or more and about 50% or less of a thickness of the case. This allows the overall size to be reduced while at the same time achieving high strength and stability.

According to one or more embodiments, the reinforcement part may be made of a metal material such as higher strength steel and/or heat resisting steel. In other words, the reinforcement part may comprise a metal material such as higher strength steel and/or heat resisting steel.

According to one or more embodiments, the reinforcement part may be made of at least one resin material of thermoplastic polyimide (TPI), polyphenylene sulfide (PPS), polyarylate (PAR), polyetheretherketone (PEEK), polyethylene terephthalate (PET), polybutylene terephthalate (PBT), polysulfone (PSU), polyethersulfone (PES), polyetherimide (PEI), polybenzimidazole (PBI), polytetrafluoroethylene (PTFE), bakelite, polyamide-imide (PAI), and fiber reinforced plastic (FRP).

According to one or more embodiments, the case may include: a circular bottom part; a side part bent upward from the bottom part to extend; a beading part disposed below the cap assembly and recessed inward; and a crimping part bent inward from an upper portion of the beading part toward an end of the side part and coupled to the cap assembly.

According to one or more embodiments, the secondary battery may further include a gasket disposed between an upper end of the case and the cap assembly, wherein an end of the extension part may extend up to a lower side of the gasket.

### BRIEF DESCRIPTION OF THE DRAWINGS

The accompanying drawings in the present specification show embodiments of the present disclosure, and are illustrated to help further understand the technical concept, aspects and features of the present disclosure, together with the detailed description of the present disclosure. The drawings illustrate aspects of some embodiments of the present disclosure and, together with the description, serve to explain aspects of some embodiments of the present disclosure. Therefore, the present disclosure shall not be interpreted as being defined only by the aspects illustrated in the drawings.
FIG. 1 illustrates a perspective view of a secondary battery according to embodiments;
FIG. 2 illustrates a cross-sectional view of the secondary battery of FIG. 1, taken along line II-II of FIG. 1;
FIG. 3 illustrates an exploded perspective view of a secondary battery according to embodiments;
FIG. 4 illustrates a cross-sectional view of a portion of a secondary battery so as to show a structure of a reinforcement part according to embodiments;
FIG. 5 illustrates an enlarged view of a portion A of FIG. 4 illustrating aspects of a reinforcement part according to embodiments; and
FIG. 6 illustrates an enlarged view of the portion A of FIG. 4 illustrating further details of a reinforcement part according to some embodiments.

### DETAILED DESCRIPTION

Embodiments of the present disclosure may, however, be embodied in many different forms and should not be construed as being limited to the embodiments set forth herein; rather, these embodiments are provided so that those skilled in the art thoroughly understand the present disclosure. Rather, these embodiments are provided so that this disclosure will be more thorough and more complete, and will more fully convey the scope of embodiments according to the present disclosure to those skilled in the art.

Reference will now be made in detail to embodiments, examples of which are illustrated in the accompanying drawings. In this regard, the present embodiments may have different forms and should not be construed as being limited to the descriptions set forth herein. Accordingly, the embodiments are merely described below, by referring to the figures, to explain aspects of the present description. Expressions such as "at least one of," if preceding a list of elements, modify the entire list of elements and do not modify the individual elements of the list.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A can be directly connected to the member B or indirectly connected to the member B with a member B therebetween.

Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper" and the like, may be used herein for ease of description to describe one element or feature's relationship to another element(s) or feature(s) as illustrated in the figures. These spatially relative terms are intended for easy comprehension of the present invention according to various process states or usage states of the present invention, and thus, embodiments according to the present disclosure are not limited thereto. For example, an element or feature shown in the drawings is turned inside out, the element or feature described as "beneath" or "below" may change into "above" or "upper". Thus the term "below" may encompass the term "above" or "below".

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Hereinafter, embodiments of the present disclosure will be described in further detail with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

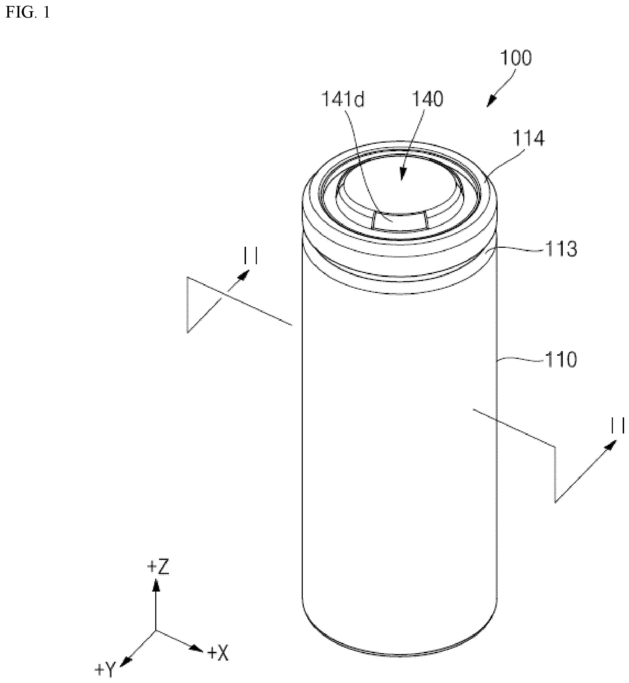

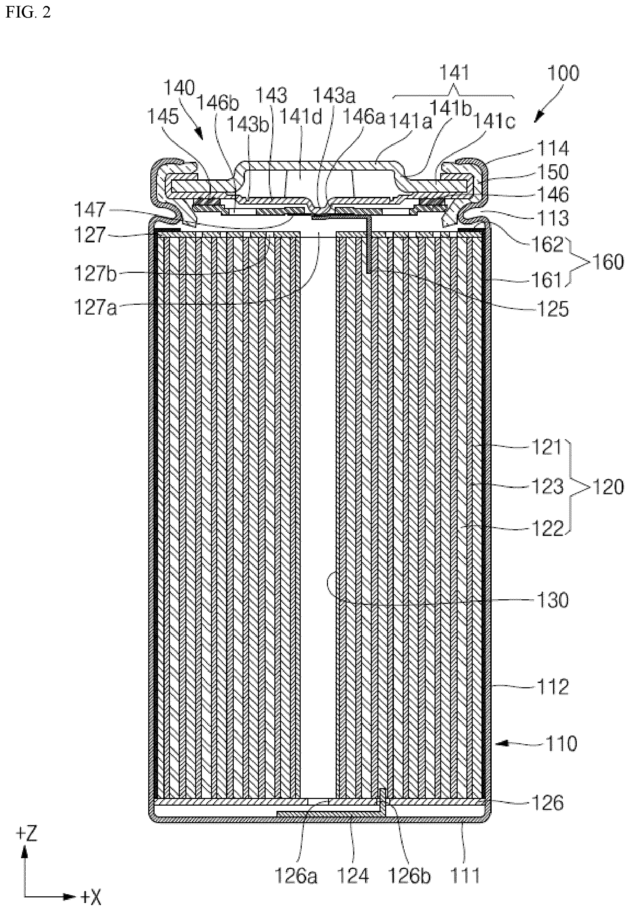

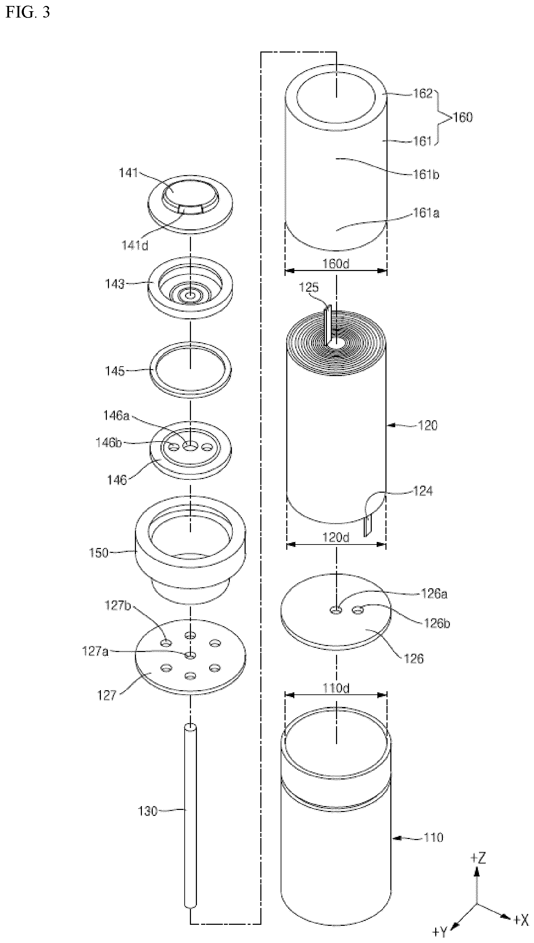

FIG. 1 illustrates a perspective view of a secondary battery according to embodiments, FIG. 2 illustrates a cross-sectional view of the secondary battery of FIG. 1, taken along line II-II of FIG. 1, and FIG. 3 illustrates an exploded perspective view of a secondary battery according to embodiments.

Referring to FIGS. 1 to 3, a secondary battery 100 according to embodiments may include a case or in other words a housing 110, an electrode assembly 120 (see, e.g., FIG. 2), may include a center pin 130 (see, e.g., FIG. 2), includes a cap assembly 140, may include an insulating gasket 150 (see, e.g., FIG. 2), and includes a reinforcement part 160 (see, e.g., FIG. 2). However, the components of the secondary battery 100 are not limited thereto, and other components may be added, and/or one or more components (e.g., the center pin) may be omitted depending in various embodiments.

The case 110 may accommodate an electrolyte therein. The case 110 may function as a main body of the secondary battery 100 to accommodate the electrode assembly 120, the center pin 130, the cap assembly 140, the insulating gasket 150, and the reinforcement part 160. The case 110 may have a cylindrical shape. According to embodiments, the case 110 may be made of steel, a steel alloy, aluminum, an aluminum alloy, or an equivalent thereof, but the material thereof is not limited thereto.

The electrolyte (not shown in the drawings) may be injected inside the case 110 to serve so that lithium ions generated by electrochemical reaction in a negative electrode plate 121 and a positive electrode plate 122 inside the battery during charging and discharging are movable. The electrolyte may be a nonaqueous organic electrolyte that is a mixture of lithium salt and a high-purity organic solvent. Furthermore, the electrolyte may be a polymer using a polymer electrolyte or a solid electrolyte, and the type of the electrolyte is not limited here.

The case 110 may include a bottom part 111 and a side part 112.

The bottom part 111 may be a bottom surface of the case 110 facing a lower side (e.g., -z direction). The bottom part 111 may be provided in an overall circular shape. Thus, the case 110 may have a generally cylindrical shape, with the side part 112 providing a generally cylindrical outer surface of the case with a cavity therein (to accommodate, for example, the electrode assembly 120), and the bottom part 111 having a generally circular shape.

The side part 112 may extend from the bottom part 111 to a certain length along a first direction (e.g., z-axis direction). The side part 112 may be a sidewall of the case 110, which surrounds the electrode assembly 120. The first direction may be a direction parallel to a direction in which a height of the secondary battery 100 increases (e.g., +z direction) or a direction in which the height of the secondary battery 100 decreases (e.g., -z direction).

According to embodiments, during the process of manufacturing the secondary battery 100, an upper portion (e.g., portion facing the +z direction) of the case 110 may be opened so that the electrode assembly 120 is injected into the case together with the electrolyte during a process of assembling the electrode assembly 120.

The case 110 may further include a beading part 113 and a crimping part 114.

The beading part 113 may perform a function to prevent or reduce separation between the cap assembly 140 from the case 110 from or others parts of the case 110. The beading part 113 may extend in a second direction (e.g., x-axis direction) crossing the first direction. The beading part 113 may be recessed toward a central portion or central (rotational) axis of the case 110. In a state in which the cap assembly 140 is located on the upper portion of the case 110 (e.g., a portion facing the +z direction), one area of the cap assembly 140 may be located at an upper side of the beading part 113, and one area of the case, on which the beading part 113 is located, may support the cap assembly 140 to prevent or reduce separation of the cap assembly 140 from the case 110 or from others parts of the case 110.

In the present disclosure, the "central portion" of the component may mean a portion, the boundaries of which, are equally spaced apart from both surfaces of the component. For example, a center of the case 110 may refer to a central portion of the case 110, which is equally spaced apart from the side parts 112.

The crimping part 114 may be located above the beading part 113 to extend in the second direction. In the state in which the cap assembly 140 is located on the upper portion of the case 110 (e.g., the portion facing the +z direction), one area of the cap assembly 140 may be located at a lower side of the crimping part 114, and the crimping part 114 may support the cap assembly 140 to prevent or reduce separation of the cap assembly 140 from the case 110 or from others parts of the case 110.

The electrode assembly 120 is accommodated in the case 110 (e.g., in a cavity or opening of the case between the side wall or side parts 112) together with the electrolyte.

The electrode assembly 120 may include a negative electrode plate 121 coated with a negative electrode (cathode) active material (e.g., graphite, carbon, etc.), a positive electrode plate 122 coated with a positive electrode (anode) active material (e.g., transition metal oxide (LiCoO₂, LiNiO₂, LiMn₂O₄, etc.)), and a separator 123 located between the negative electrode plate 121 and the positive electrode plate 122 to prevent or reduce instances of a short circuit occurring and allowing lithium ions to move only. The negative electrode plate 121, the positive electrode plate 122, and the separator 123 are wound in a substantially cylindrical shape. According to embodiments, the negative electrode plate 121 may be copper (Cu) or nickel (Ni) foil, the positive electrode plate 122 may be aluminum (Al) foil, and the separator 123 may be polyethylene (PE) or polypropylene (PP), but is not limited to the above materials.

According to embodiments, the negative electrode plate 121 may include at least one negative electrode tab 124 protruding downward by a length (e.g., a set or predetermined length), and the positive electrode plate 122 may include at least one positive electrode tab 125 protruding upward by a length (e.g., a set or predetermined length). According to embodiments, the negative electrode tab 124 and the positive electrode tab 125 may be provided as separate metal plates and may be welded to the negative electrode plate 121 and the positive electrode plate 122 of the electrode assembly, respectively. According to embodiments, the negative electrode tab 124 may include a copper or nickel material, and the positive electrode tab 125 may include an aluminum material.

Also, the negative electrode tab 124 of the electrode assembly 120 may be welded to the bottom part 111 of the case 110. According to embodiments, the case 110 may operate as a negative electrode.

According to embodiments, the secondary battery 100 according to one ore more embodiments of the present invention may further include a first insulating plate 126 and a second insulating plate 127.

The first insulating plate 126 may be coupled to the case 110 and located between the electrode assembly 120 and the bottom part 111. A first hole 126a and a second hole 126b may be defined in the first insulating plate 126. According to embodiments, the first hole 126a may be defined at a central portion of the first insulating plate 126, and the second hole 126b may be defined outside the central portion of the first insulating plate 126.

The first insulating plate 126 may serve to prevent or reduce electrical contact between the electrode assembly 120 and the bottom part 111 of the case 110. According to embodiments, the first insulating plate 126 may serve to prevent or reduce electrical contact between the positive electrode plate 122 of the electrode assembly 120 and the bottom part 111. According to embodiments, the first hole 126a may serve to allow a gas to quickly move upward through the center pin 130 if a large amount of gas is generated due to abnormality in the secondary battery, and the second hole 126b may serve to allow the negative electrode tab 124 to pass therethrough so as to be welded to the bottom part 111.

The second insulating plate 127 may be coupled to the case 110 and located between the electrode assembly 120 and the cap assembly 140. A first hole 127a and a second hole 127b may be defined in the second insulating plate 127. According to embodiments, the first hole 127a may be defined at a central portion of the second insulating plate 127, and the second hole 127b may be defined outside the central portion of the second insulating plate 127.

The second insulating plate 127 may serve to prevent or reduce electrical contact between the electrode assembly 120 and the cap assembly 140. According to embodiments, the second insulating plate 127 may serve to prevent or reduce electrical contact between the negative electrode plate 121 of the electrode assembly 120 and the cap assembly 140. According to embodiments, the first hole 127a may serve to allow the gas to the cap assembly 140 to quickly move if a large amount of gas is generated due to abnormality in the secondary battery. According to embodiments, the second hole 127b may allow the positive electrode tab 125 to pass through and be welded to the cap assembly 140 and may serve to allow the electrolyte to relatively quickly flow into the electrode assembly 120 during an electrolyte injection process.

According to embodiments, a diameter of each of the first hole 126a and the second hole 126b of the first insulating plate 126 may be less than that of the center pin 130, and thus, the center pin 130 may not be in electrical contact with the bottom part 111 of the case 110. According to embodiments, a diameter of each of the first hole 127a and the second hole 127b of the second insulating plate 127 may be less than that of the center pin 130, and thus, the center pin 130 may not be in electrical contact with the cap assembly 140.

The center pin 130 may have a hollow circular pipe shape and may be located at the central portion of the electrode assembly 120. For example, the center pin 130 may be made of steel, a steel alloy, aluminum, an aluminum alloy, or polybutylene terepthalate, but the material thereof is not limited thereto. The center pin 130 may serve to suppress deformation of the electrode assembly 120 during charging and discharging of the battery and serve as a passage for the gas generated inside the secondary battery.

The cap assembly 140 may be coupled to the upper portion (e.g., portion facing the +z direction) of the case 110. If the cap assembly 140 is coupled to the upper portion of the case 110, the cap assembly 140 may covers the upper portion of the electrode assembly 120.

The cap assembly 140 may include a cap-up 141 having a plurality of openings 141 d, a safety plate 143 installed on a lower portion of the cap-up 141, a connection ring 145 installed on a lower portion of the safety plate 143, a cap-down 146 coupled to the connection ring 145 and having a through-hole 146a and a gas discharge hole 146b, and a sub-plate 147 fixed to a lower portion of the cap-down 146 and electrically connected to the positive electrode tab 125. According to embodiments, the cap-down 146 and the sub-plate 147 may be integrally provided. According to embodiments, the positive electrode tab 125 may be fixed to the cap-down 146.

The components of the cap assembly 140 are not limited thereto, and other components may be added, or at least one component may be omitted depending on the embodiments.

One area of the cap-up 141 may be provided to be convex upward (e.g., in the +z direction) and may be electrically connected to an external circuit. The cap-up 141 may include a terminal part 141a, a connection part 141 b, and an edge part 141c, which are sequentially arranged outward from the center. The terminal part 141a, the connection part 141b, and the edge part 141c will be described later.

According to embodiments, the cap-up 141 may be provided with an opening 141d that provides a path through which the gas generated inside the case 110 is discharged to the outside. The cap-up 141 may be electrically connected to the electrode assembly 120 to transmit current generated in the electrode assembly 120 to an external circuit.

The safety plate 143 may function to block electric current and discharge the internal gas if an abnormal internal pressure occurs inside the case 110. The safety plate 143 may be provided as a circular plate body corresponding to the cap-up 141. A protrusion 143a protruding downward may be located at a center of the safety plate 143. The safety plate 143 may be electrically connected to the sub-plate 147 fixed to a bottom surface of the cap-down 146 by using the protrusion 143a passing through the through-hole 146a of the cap-down 146. According to embodiments, the protrusion 143a of the safety plate 143 and the sub-plate 147 may be welded through laser welding, ultrasonic welding, resistance welding, or an equivalent method thereof. According to embodiments, a vent part 143b for guiding breakage of the safety plate 143 may be provided in an outer circumference of the protrusion 143a. The vent part 143b may be a notch provided downward from a top surface of the safety plate 143. One area of the safety plate 143 in which the vent part 143b is provided may be thinner than the other area of the safety plate 143 in which the vent part 143b is not provided.

One area 143b of the safety plate 143 may be arranged to be in close contact with one area (e.g., an outer circumference) of the cap-up 141. According to some embodiments, one area (e.g., outer circumference) of the safety plate 143 may be bent and extend in the first direction and the second direction to surround one area (e.g., the outer circumference) of the cap-up 141 and may be in contact with the one area of the cap-up 141. According to embodiments, the edge of the safety plate 143 may surround the cap-up 141 and extend to an upper side of the cap-up 141 to cover a top surface or a part of the top surface of the cap-up 141.

A coupling relationship between the safety plate 143 and the cap-up 141 will be described in detail below. The safety plate 143 may discharge an internal gas while blocking current if the abnormal internal pressure occurs in the case 110. If the internal pressure of the cylindrical can 110 is equal to or greater than an operation pressure of the safety plate 143, the protrusion 143a may ascend upward by the gas discharged through the gas discharge hole 146a of the cap-down 146, and thus, the safety plate 143 may be electrically separated from the sub-plate 147. According to embodiments, the sub-plate 147 may be electrically separated from the safety plate 143 while a welded portion of the protrusion 143a is torn. According to embodiments, if the internal pressure of the case 110 is greater than or equal to the breaking pressure that is higher than the operation pressure of the safety plate 143, the vent part 143b may be broken to prevent or reduce damage (e.g., explosion, fire, etc.) of the secondary battery 100.

The connection ring 145 may be located between the safety plate 143 and the cap-down 146 to insulate the safety plate 143 and the cap-down 146 from each other. According to embodiments, the connection ring 145 may be located between an outer circumference of the safety plate 143 and an outer circumference of the cap-down 146. The connection ring 145 may be made of a resin material such as polyethylene, polypropylene, or polyethylene terephthalate.

The cap-down 146 may be connected to a bottom surface (e.g., surface facing the -z direction) of the connection ring 145. The cap-down 146 may be provided as a circular plate. The through-hole 146a may be defined at the center of the cap-down 146, and the protrusion 143a of the safety plate 143 may pass through the through-hole 146a. According to embodiments, the gas discharge hole 146b may be defined at one side of the cap-down 146, and the sub-plate 147 may be coupled to a lower portion of the cap-down 146. The gas discharge hole 146b may serve to discharge the internal gas if an excessive internal pressure is generated in the cylindrical can 110. According to embodiments, the protrusion 143a of the safety plate 143 may ascend by the gas discharged through the gas discharge hole 146b, and thus, the protrusion 143a may be separated from the sub-plate 147.

The sub-plate 147 may be located between the protrusion 143a of the safety plate 143, which passes through the through-hole 146a of cap-down 146, and the positive electrode tab 125. The sub-plate 147 may be welded between the protrusion 143a and the positive electrode tab 125. According to embodiments, the sub-plate 147 may electrically connect the positive electrode tab 125 to the safety plate 143.

According to embodiments, if a short circuit occurs in the secondary battery 100, the internal pressure of the case 110 and/or a temperature inside the case 110 may increase, and thus, the internal gas may be discharged through the gas discharge hole 146b of the cap down 146. Here, the protrusion 143a of the safety plate 143 ascends by the discharged gas and then is electrically separated from the sub-plate 147 to cut off the current. In the present disclosure, a normal temperature range inside the case 110 may be in a range of 90°C or more and 110°C or less (or about 90°C or more and about 110°C or less).

The insulating gasket 150 may serve to insulate the cap assembly 140 from the case 110 and seal a gap between the cap assembly 140 and the case 110.

The insulating gasket 150 may be installed in the upper opening of the case 110. According to embodiments, the insulating gasket 150 may be substantially located between the beading part 113, which is provided on the side part of the case 110, and the crimping part 114. For example, the insulating gasket 150 may be in the compressed form of the beading part 113 and the crimping part 114. That is, the insulating gasket 150 may be assembled by being in close contact between the outer circumference of the cap-up 141, the safety plate 143, and the upper opening of the case 110. Here, the cap-up 141 coupled to the safety plate 143 may be fixed to the upper end of the case 110 in the state in which the insulating gasket 150 is interposed by the crimping part 114 located on the upper end of the case 110.

The insulating gasket 150 may be made of a resin material such as polyethylene, polypropylene, polyethylene terephthalate, or the like. The insulating gasket 150 may prevent or reduce separation between the cap assembly 140 and the case 110.

The reinforcement part 160 may be located between the case 110 and the electrode assembly 120. If the internal pressure of the case 110 increases, the reinforcement part 160 may reinforce strength of the case 110 to block force due to the internal pressure from being directly transmitted to the case 110. According to embodiments, because the secondary battery 100 according to embodiments reduces the internal pressure of the case 110 by discharging the gas through the gas discharge hole 146b and reinforce the strength of the case 110 through the reinforcement part 160, possibility of damage of the side part 112 and the beading part 113 due to a high pressure and heat may be relatively reduced.

The reinforcement part 160 may include an appropriate material capable of withstanding the internal pressure of the case 110.

According to embodiments, the reinforcement part 160 may include a metal material such as higher strength steel or heat resisting steel. In the present exemplary embodiments, the higher strength steel may mean steel with tensile strength of about 50 kg/mm² or more and a yield point of about 30 kg/mm² or more (e.g. measured by means of a tensile test according to ISO 6892-1). For example, the reinforcement part 160 may include bake-hardenable (HB) steel, a high strength low alloy (HSLA) rephosphorized (R) steel, interstitial free (IF) HSS, and an auTomobile structural (ATOS) steel material. In the present disclosure, the heat resisting steel may mean steel that maintains sufficient mechanical properties at a high temperature and is resistant to a chemical action such as oxidation. For example, the reinforcement part 160 may include chromium-molybdenum steel, 13% chromium steel, or 13% chromium steel at a temperature of about 600°C or more and may include a high chromium steel (about 28%) or high nickel/high chromium steel (about 20% to about 25%) material at a temperature of about 900°C.

In other embodiments, the reinforcement part 160 may include a resin material of engineering plastic that is thermally deformed at a temperature of about 200°C or more. For example, the reinforcement part 160 may include at least one resin material of thermoplastic polyimide (TPI), polyphenylene sulfide (PPS), polyarylate (PAR), polyetheretherketone (PEEK), polyethylene terephthalate (PET), polybutylene terephthalate (PBT), polysulfone (PSU), polyethersulfone (PES), polyetherimide (PEI), polybenzimidazole (PBI), polytetrafluoroethylene (PTFE), bakelite, polyamide-imide (PAI), and fiber reinforced plastic (FRP).

The reinforcement part 160 may include a material that is capable of withstanding the internal pressure of the case 110 and the heat generated inside the case 110 rather than the case 110. According to embodiments, the reinforcement part 160 may use a material having strength greater than that of the case 110 to reinforce the strength of the case 110, but in the present disclosure, it is not limited to strength between the reinforcement part 160 and the case 110. For example, the reinforcement part 160 and the case 110 may be selected in an appropriate combination from the above-described metal materials or resin materials.

According to embodiments, the reinforcement part 160 may be configured to be inserted between the case 110 and the electrode assembly 120. According to embodiments, the secondary battery 100 that is capable of withstanding the internal pressure of the case 110 may be manufactured through a relatively simple operation of inserting the reinforcement part 160 between the case 110 and the electrode assembly 120 to relatively improve ease of assembly of the secondary battery 100.

To allow the reinforcement part 160 to be inserted between the case 110 and the electrode assembly 120, a size of the reinforcement part 160 has to be greater than that of the electrode assembly 120 and less than that of the case 110. For example, an (outer) diameter 160d of the reinforcement part 160 may be less than an inner diameter 110d of the case 110. According to embodiments, the diameter 160d of the reinforcement part 160 may be greater than an outer diameter 120d of the electrode assembly 120. For simplification, it is assumed that the diameter 160d of the reinforcement part 160 is also a designation for an inner diameter of the reinforcement part 160, so that in other words the inner diameter of the reinforcement part 160 is larger than an outer diameter 120d of the electrode assembly 120. The reinforcement part 160 may be located between the electrode assembly 120 and the case 110.

The reinforcement part 160 may include a reinforcement body 161 and an extension part 162.

The reinforcement body 161 may be located between the electrode assembly 120 and the case 110 to extend along the first direction in which the case 110 extends. The reinforcement body 161 may function as the main body of the reinforcement part 160 and may be provided in the form of an overall hollow cylinder, but the shape is not limited thereto.

According to embodiments, a diameter of a lower end 161a of the reinforcement body 161 may be different from that of an intermediate portion 161b of the reinforcement body 161. According to embodiments, the diameter of the lower end 161a of the reinforcement body 161 may be less than that of the intermediate portion 161b of the reinforcement body 161. According to embodiments, the reinforcement part 160 may be easily inserted between the case 110 and the electrode assembly 120 through the lower end 161a of the reinforcement body 161 having a small diameter. That is, the reinforcement body 161 may be coupled to the electrode assembly 120 from the lower end 161a in a downward direction of the electrode assembly 120.

According to embodiments, a thickness of the lower end 161a of the reinforcement body 161 may be different from that of the intermediate portion 161b of the reinforcement body 161. According to embodiments, the thickness of the lower end 161a of the reinforcement body 161 may be less than that of the intermediate portion 161b of the reinforcement body 161. According to embodiments, the reinforcement part 160 may be relatively easily inserted between the case 110 and the electrode assembly 120 through the lower end 161a of the reinforcement body 161, which has a small thickness.

The extension part 162 may be located below the cap assembly 140 to extend along the second direction. The extension part 162 may be connected to an upper end of the reinforcement body 161. For example, the extension part 162 may be provided to be integrated with the reinforcement body 161.

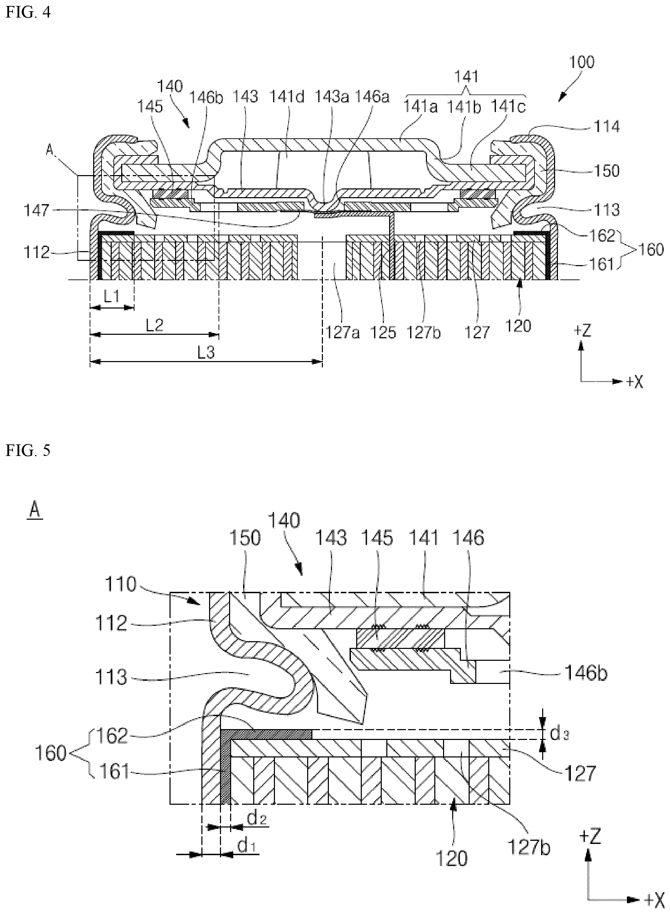

Hereinafter, the structure of the reinforcement part 160 will be described in more detail with reference to FIGS. 4 to 6.

FIG. 4 illustrates a cross-sectional view of a portion of the secondary battery so as to show a structure of a reinforcement part according to embodiments;

At least one of the components of the secondary battery 100 illustrated in FIG. 4 may be the same as or similar to at least one of the components of the secondary battery 100 illustrated in FIGS. 1 to 3, and thus, some duplicated descriptions of the same or similar components may be omitted below.

The cap-up 141 of the cap assembly 140 includes a terminal part 141a, a connection part 141b, and an edge part 141c, which are sequentially arranged in the outward direction from the center.

The terminal part 141a may be about flat and may be located at a substantially center of the cap-up 141.

The connection part 141b is provided by being bent downward from an edge of the terminal part 141a and includes at least one opening 141d. The opening 141d may discharge the gas inside the case 110 to the outside if the vent part 143b of the safety plate 143 is broken.

According to embodiments, the edge part 141c may extend outward from a lower end of the connection part 141b in a horizontal direction. An edge surface of the edge part 141c may be surrounded by the safety plate 143. According to embodiments, the bottom surface or a part of the bottom surface of the edge part 141c and a portion of the top surface of the edge part 141c may be in contact with the safety plate 143. According to embodiments, the edge surface may be a surface at least connecting a bottom surface to a top surface of the edge part 141c.

The cap-up 141 may be made of any one selected from general aluminum, an aluminum alloy, steel, a steel alloy, nickel, a nickel alloy, and equivalents thereof, and the material thereof is not limited in the present invention.

The reinforcement body 161 may be located between the electrode assembly 120 and the case 110 to prevent or reduce transfer of heat of the electrode assembly 120 to the side part 112 of the case 110. According to embodiments, the reinforcement body 161 may perform a function of guiding the force or heat due to the internal pressure to move along the first direction (e.g., +z direction or -z direction). In the secondary battery 100 according to embodiments, damage or breakage of the side part 112 may be prevented or reduced to relatively improve an overall use cycle of the secondary battery 100.

The reinforcement body 161 may be in contact with each of the side part 112 of the case 110 and the electrode assembly 120. According to embodiments, the reinforcement body 161 may be spaced apart from each of the side part 112 of the case 110 and the electrode assembly 120 or may be in contact with only one of the side part 112 of the case 110 or the electrode assembly 120.

The extension part 162 may be located between the beading part 113 and the electrode assembly 120 to prevent or reduce transmission of the force due to the internal pressure or heat inside the case 110 to the beading part 113. In the secondary battery 100 according to some embodiments, damage or breakage of the beading part 113 may be prevented or reduced to relatively improve an overall use cycle of the secondary battery 100.

According to embodiments, the extension part 162 may extend along the second direction and may not overlap the first hole 127a of the second insulating plate 127 and the gas discharge hole 146b. According to embodiments, the extension part 162 may be arranged so as not to block the first hole 127a of the second insulating plate 127 and the gas discharge hole 146b. According to embodiments, the extension part 162 may easily discharge the internal gas or heat to the outside through the first hole 127a and the gas discharge hole 146b if an excessive internal pressure occurs inside the case 110. According to embodiments, if the vent part 143b of the safety plate 143 is broken by the heat or gas inside the case 110, the extension part 162 may serve as a guide so that the heat inside the case 110 is discharged to the gas discharge hole 146b of the cap down 146.

According to embodiments, the secondary battery 100 according to embodiments may be implemented with a structure that prevents or reduces the damage to the beading part 113 through the extension part 162 and facilitates the discharge of the gas or heat.

To allow the extension part 162 to be arranged so as not to block the first hole 127a of the second insulating plate 127 and the gas discharge hole 146b, an end of the extension part 162 may be spaced apart from each of the first hole 127a and the gas discharge hole 146b in the second direction. For example, the end of the extension part 162 may be spaced a first distance L1 from the side part 112 of the case 110, the gas discharge hole 146b may be spaced a second distance L2 from the side part 112 of the case 110, and the first hole 127a may be spaced a third distance L3 from the side part 112 of the case 110. According to embodiments, the first distance L1 may be less than each of the second distance L2 and the third distance L3. According to embodiments, the extension part 162 may be arranged so as not to block the first hole 127a of the second insulating plate 127 and the gas discharge hole 146b.

The extension part 162 may extend up to a lower side of the gasket 150. According to embodiments, the end of the extension part 162 may be adjacent to and overlap the lower end of the gasket 150 projected along the z-direction on a plane extending in x- and y-direction.

FIG. 5 illustrates an enlarged view of a portion A of FIG. 4 illustrating aspects of a reinforcement part according to embodiments.

At least one of the components of the secondary battery 100 illustrated in FIG. 5 may be the same as or similar to at least one of the components of the secondary battery 100 illustrated in FIG. 4, and thus, some duplicated descriptions of the same or similar components may be omitted below.

A thickness d1 of the case 110 may be greater than that of the reinforcement part 160. According to embodiments, each of a thickness d2 of the reinforcement body 161 and a thickness d3 of the extension part 162 may be less than the thickness d1 of the case 110. According to some embodiments, an overall size of the secondary battery 100 may be relatively to achieve miniaturization.

According to embodiments, the thickness d2 of the reinforcement body 161 may be in a range of 5% to 50% (or about 5% to about 50%) of the thickness d1 of the case 110.

In a comparative example in which the thickness d2 of the reinforcement body 161 is less than 5% (or about 5%) of the thickness d1 of the case 110, the reinforcement body 161 may not sufficiently reinforce the strength of the case 110, and thus, the side part 112 may be relatively more likely to be damaged by a high pressure and heat. According to embodiments, in the comparative example in which the thickness d2 of the reinforcement body 161 exceeds 50% (or about 50%) of the thickness d1 of the case 110, the size of the reinforcement body 161 may become too large, and thus, the size of the case 110 may increase overall.

In the secondary battery 100 according to embodiments, because the thickness d2 of the reinforcement body 161 is about 5% to about 50% of the thickness d1 of the case 110, the overall size of case 110 may be reduced while the reinforcement body 161 sufficiently reinforces the strength of the side part 112.

According to embodiments, the thickness d3 of the extension part 162 may be about 5% to about 50% of the thickness d1 of the case 110. According to embodiments, the extension part 162 may sufficiently reinforce the strength of the beading part 113, and also, the overall size of the case 110 may be reduced.

According to embodiments, the thickness d3 of the extension part 162 may be greater or less than the thickness d2 of the reinforcement body 161. The thickness d3 of the extension part 162 may be the same as the thickness d2 of the reinforcement body 161.

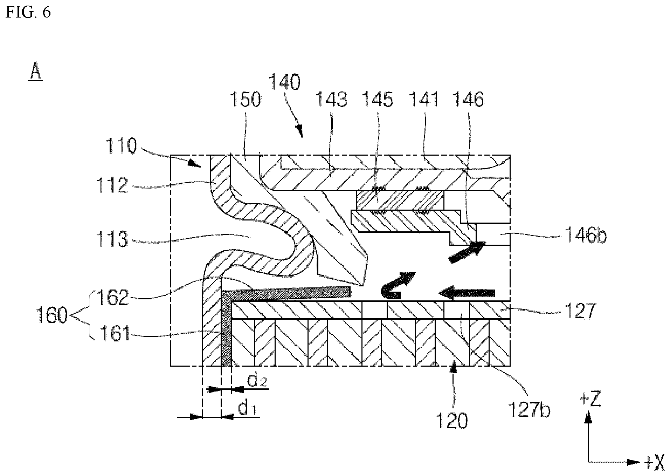

FIG. 6 illustrates an enlarged view of the portion A of FIG. 4 illustrating further details of a reinforcement part according to embodiments.

At least one of the components of the secondary battery 100 illustrated in FIG. 6 may be the same as or similar to at least one of the components of the secondary battery 100 illustrated in FIG. 5, and thus, some duplicated descriptions of the same or similar components may be omitted below.

The extension part 162 may perform a function of guiding at least one of heat, a gas, flame, or an electrolyte (hereinafter, referred to as a fluid inside the case 110) inside the case 110 to the outside of the cap assembly 140. According to embodiments, the extension part 162 may be connected to the reinforcement body 161 so as to be inclined toward the cap assembly 140. The extension part 162 may be inclined so that the end thereof is adjacent to the cap assembly 140 rather than the portion thereof connected to the reinforcement body 161.

The fluid inside the case 110 may pass through the first hole 127a of the second insulating plate 127 to flow into a space between the cap assembly 140 and the electrode assembly 120 as illustrated as an arrow (flow) in FIG. 6. A portion of the fluid flowing into the space between the cap assembly 140 and the electrode assembly 120 may move toward the extension part 162. According to embodiments, the extension part 162 may guide the fluid flowing in the space between the cap assembly 140 and the electrode assembly 120 to move toward the gas discharge hole 146b. This may be because the extension part 162 is inclined toward the gas discharge hole 146b. According to embodiments, the secondary battery 100 according to embodiments may induce the fluid inside the case 110 to smoothly move to the gas discharge hole 146b of the cap assembly 140. According to embodiments, the possibility of the damage or breakage of the secondary battery 100 due to the fluid inside the case 110 may be more reduced.

In the secondary battery according to embodiments, if the internal pressure of the case increases, the strength of the case may be reinforced to block the direct transmission of the force due to the internal pressure of the case to the case, thereby preventing or relatively reducing damage to the case and relatively improving the safety of the secondary battery.

The characteristics of embodiments according to the present invention are not limited to the characteristics mentioned above, and other characteristics not mentioned will be more clearly understood by those skilled in the art from the appended claims, and their equivalents.

## Claims

1. A secondary battery (100) comprising:
a case (110) in which an electrolyte is accommodated;
an electrode assembly (120) accommodated together with the electrolyte in the case (110);
a cap assembly (140) coupled to an upper portion of the case (110); and
a reinforcement part (160) comprising a reinforcement body (161) disposed between the electrode assembly (120) and the case (110) to extend in a first direction, in which the case (110) extends, and an extension part (162) disposed below the cap assembly (140) to extend from the reinforcement body (161) toward a central portion of the cap assembly (140) in a second direction crossing the first direction.

2. The secondary battery (100) as claimed in claim 1, wherein the case (110) comprises a beading part (113) recessed in the second direction at a lower portion of the cap assembly (140), and wherein
the extension part (162) is disposed between the beading part (113) and the electrode assembly (120), optionally the extension part (162) extending further toward the central portion of the cap assembly (140) than the recessed beading part (113).

3. The secondary battery (100) as claimed in claim 1 or 2, further comprising:
a first insulating plate (126) disposed between the electrode assembly (120) and a bottom surface of the case (110); and/or
a second insulating plate (127) disposed between the electrode assembly (120) and the cap assembly (140).

4. The secondary battery (100) as claimed in claim 3, wherein the extension part (162) extends along a top surface of the second insulating plate (127).

5. The secondary battery (100) as claimed in claim 3 or 4, wherein the second insulating plate (127) comprises a first hole (127a) that passes between a top surface and a bottom surface of the second insulating plate (127), and wherein
the extension part (162) does not overlap the first hole (127a) on a plane.

6. The secondary battery (100) as claimed in any one of claims 1 to 5, wherein the cap assembly (140) comprises:
a cap-up (141) of which a central portion protrudes outward;
a safety plate (143) disposed below the cap-up (141) and having a vent part (143b); and
a cap-down (146) disposed below the safety plate (143) and having a gas discharge hole (146b) that passes between a top surface and a bottom surface of the cap-down (146).

7. The secondary battery (100) as claimed in claims 5 or 6, wherein the extension part (162) does not overlap the first hole (127a) and/or the gas discharge hole (146b).

8. The secondary battery (100) as claimed in any one of claims 5 to 7, wherein an end of the extension part (162) is spaced a first distance (L1) from a side part (112) of the case (110), wherein
the gas discharge hole (146b) is spaced a second distance (L2) from the side part (112) of the case (110), wherein the first distance (L1) is less than the second distance (L2), and/or wherein
the first hole (127a) is spaced a third distance (L3) from the side part (112) of the case (110), wherein the first distance (L1) is less than the third distance (L3).

9. The secondary battery (100) as claimed in any one of claims 1 to 8, wherein an end of the extension part (162) is inclined to be adjacent to the cap assembly (140).

10. The secondary battery (100) as claimed in any of claims 1 to 9, wherein a lower end (161a) of the reinforcement body (161) has a diameter less than each of other areas thereof, and/or wherein a lower end (161a) of the reinforcement body (161) has a thickness less than each of other areas thereof.

11. The secondary battery (100) as claimed in any one of claims 1 to 10, wherein the reinforcement part (160) has a thickness less than that of the case (110), and/or wherein the reinforcement part (160) has a diameter (160d) greater than an outer diameter (120d) of the electrode assembly (120) and less than an inner diameter (110d) of the case (110).

12. The secondary battery (100) as claimed in any one of claims 1 to 11, wherein a thickness (d2, d3) of the reinforcement part (160) is in a range of 5% or more and 80% or less, preferably 15% or more and 65% or less, and particularly preferably 30% or more and 50% or less of a thickness (d1) of the case (110).

13. The secondary battery (100) as claimed in any one of claims 1 to 12, wherein
the reinforcement part (160) is made of a metal material such as higher strength steel and/or heat resisting steel, or wherein
the reinforcement part (160) is made of at least one resin material of the group of thermoplastic polyimide (TPI), polyphenylene sulfide (PPS), polyarylate (PAR), polyetheretherketone (PEEK), polyethylene terephthalate (PET), polybutylene terephthalate (PBT), polysulfone (PSU), polyethersulfone (PES), polyetherimide (PEI), polybenzimidazole (PBI), polytetrafluoroethylene (PTFE), bakelite, polyamide-imide (PAI), and fiber reinforced plastic (FRP).

14. The secondary battery (100) as claimed in any one of claims 1 to 13, wherein the case (110) comprises:
a circular bottom part (111);
a side part (112) bent upward from the circular bottom part (111) to extend;
a beading part (113) disposed below the cap assembly (140) and recessed inward; and
a crimping part (114) bent inward from an upper portion of the beading part (113) toward an end of the side part (112) and coupled to the cap assembly (140).

15. The secondary battery (100) as claimed in any one of claims 1 to 14, further comprising a gasket (150) disposed between an upper end of the case (110) and the cap assembly (140),
wherein an end of the extension part (160) extends up to a lower side of the gasket (150).
